# EUROPÄISCHE PATENTSCHRIFT

(11) **EP 0 776 066 B1**
(45) Veröffentlichungstag und Bekanntmachung des Hinweises auf die Patenterteilung: **11.10.2000**
(21) Anmeldenummer: 96118092.4
(22) Anmeldetag: 12.11.1996
(51) Int. Cl.: H01R 13/40, H01R 12/38

(54) **Anordnung, Verfahren und Kontakt zum Kontaktieren mindestens eines Lötstützpunktes und Verwendung der Anordnung**
Arrangement, process and contact for contacting at least one solder terminal and use of this arrangement
Structure, procédé et contact pour contacter au moins une barette à souder et utilisation de cette structure

(30) Priorität: 21.11.1995 DE 19543422; 28.02.1996 DE 19607542
(43) Veröffentlichungstag der Anmeldung: 28.05.1997
(73) Patentinhaber: THE WHITAKER CORPORATION, Wilmington, Delaware 19808 (US)
(72) Erfinder: Pech, Udo Alfred, 64750 Lützelbach (DE); Hahn, Joachim Alfred, 61389 Schmitten (DE); Kuempel, Dietrich Wilhelm, 65428 Rüsselsheim (DE); Ries, Annette Carola, 63517 Rodenbach (DE); Jetter, Rolf, 64291 Darmstadt (DE)
(74) Vertreter: Heinz-Schäfer, Marion

(56) Entgegenhaltungen:
- EP-A- 0 053 356
- EP-A- 0 632 536
- EP-A- 0 680 115
- DE-A- 2 618 673
- DE-A- 3 604 437
- DE-U- 9 115 544

## Beschreibung

Die Erfindung betrifft eine Anordnung zum Kontaktieren mindestens eines Lötstützpunktes nach dem Oberbegriff des Patentanspruches 1, sowie eine Verwendung der Anordnung.

Es ist bei Automobilen üblich, in der Heckscheibe leitende Folienbahnen vorzusehen, beispielsweise zur Heizung der Heckscheibe oder als Antenne. Antennendrähte können auch in der Frontscheibe vorgesehen werden. Zur Verbindung der Leitungen in den Scheiben ist es Stand der Technik, an einen Lötstützpunkt einen Draht anzuschweissen. Dabei wird jede benötigte Leitung extra angeschweisst.

Aus der DE-A-2618673 ist eine Buchsenleiste für elektrische Steckverbinder von Flachbandkabeln bekannt. Diese Buchsenleiste weist ein Buchsengehäuse mit Buchsenkontakten auf. Das Buchsengehäuse ist in einen Stiftträger einbringbar, in dem Kontaktstifte vorgesehen sind. Buchsengehäuse und Stiftträger weisen komplementäre Rastmittel zum Verrasten ineinander auf.

Ausgehend von dieser Druckschrift, aus der sämtliche Merkmale des Oberbegriffes Patentanspruches 1 bekannt sind, ist es Aufgabe der Erfindung eine Anordnung zum Kontaktieren mindestens eines Lötstützpunktes und eine Verwendung der Anordnung anzugeben.

Die Aufgabe wird durch eine Anordnung mit den Merkmalen des Patentanspruches 1 und durch eine Verwendung mit den Merkmalen des Patentanspruches 12 gelöst. Vorteilhafte Weiterbildungen der Anordnung sind den Ansprüchen 2 bis 11 zu entnehmen.

Es ist besonders vorteilhaft, dass nicht jeder Lötstützpunkt direkt mit einem Draht, sondern zunächst mit einem Kontakt mit einem Stift verbunden wird, der in einem Stiftträger geschützt aufgenommen wird. Der Stiftträger mit den Kontakten mit den Stiften kann dann mit einem Buchsengehäuse verbunden werden. In dem Buchsengehäuse sind Kontaktkammern vorgesehen, die jeweils einen Buchsenkontakt aufnehmen, der die Verbindung mit dem Stift herstellt. Weiter ist von Vorteil, dass im Reparaturfall das Buchsengehäuse wieder entfernt werden kann, und nach Reparatur einfach wieder aufgesteckt wird. Es können also alle Anschlüsse nach dem Auflöten der Kontakte mit den Stiften in einem Arbeitsgang gesteckt und wieder gelöst werden. Dabei wird eine beliebige Anzahl von Leitungen verbunden. Der Stiftträger und das Buchsengehäuse tragen komplementäre Rastmittel, um ein Verrasten der Stecker ineinander zu ermöglichen. Auch eine Verriegelung ist möglich. Mit der vorgeschlagenen Anordnung können alle Arten von elektrischen Heckscheibenanschlüssen, aber auch Frontscheibenanschlüssen, hergestellt werden.

Die Verbindung zu den Lötstützpunkten kann dabei auf zwei verschiedene Arten hergestellt werden. Im ersten Verfahren wird zunächst ein Kontakt mit einem Stift, wobei der Stift an einem Ende in einen Lötkontakt übergeht und an einem anderen Ende einen Kontaktierungsbereich aufweist mit dem Lötkontakt auf den Lötstützpunkt aufgelötet. Möchte man mehrere Lötstützpunkte verbinden, so wird dieser Vorgang mehrfach wiederholt. Danach wird ein Stiftträger auf den Kontakt beziehungsweise die Kontakte aufgebracht. Der Stiftträger wird durch eine Lasche, die vom Lötkontakt abgebogen ist, befestigt. Eine solche Befestigung kann mittels einer Formpassung oder dadurch erfolgen, dass an den Schmalseiten der Lasche Zähne vorgesehen sind, die in das Kunststoffgehäuse des Stiftträgers einschneiden. Nachdem der Stiftträger befestigt ist, kann ein Buchsengehäuse mit Buchsenkontakten in den Stiftträger eingebracht und mit diesem verrastet werden.

Beim zweiten Verfahren enthält der Stiftträger schon mindestens einen Kontakt mit einem Stift, der ebenfalls durch umgebogene Laschen am Lötkontakt an diesem befestigt ist. Der Stiftträger mit Kontakten wird auf die Fläche mit den Lötstützpunkten aufgesetzt und eine Lötung erfolgt durch Öffnungen im Stiftträger hindurch, oder an Stellen an denen der Lötkontakt unter dem Stiftträger herausragt. Nach dem Verlöten kann auch bei diesem Verfahren das Buchsengehäuse auf den Stiftträger aufgerastet werden.

Es erweist sich als besonders vorteilhaft, das Buchsengehäuse in der Ebene in den Stiftträger einzurasten, in der sich die Lötstützpunkte befinden. Um dies zu erreichen, sind die Stifte U-förmig gebogen, wobei das eine Ende beispielsweise am kürzeren Schenkel des U's in einen Lötkontakt übergeht und das andere Ende, das sich oberhalb der Fläche mit den Lötstützpunkten befindet, einen Kontaktierungsbereich bildet. Auf diesen Kontaktierungsbereich werden die Buchsenkontakte des Buchsengehäuses aufgeschoben.

Es ist besonders vorteilhaft zum Verlöten der Stifte mit den Lötkontakten auf den Lötstützpunkten einer Scheibe ein Lötmittelreservoir im Bereich des Lötkontaktes vorzusehen. Dazu befindet sich im Lötkontakt eine gestanzte Öffnung, in die beispielsweise ein Stück Lötdraht eingepresst wird. Dadurch ist ein Lötzinn- und/oder Flussmittelvorrat im Lötkontakt selbst vorgesehen und muss nicht bei der Lötung zugefügt werden. Der Arbeitsvorgang des Auflötens der Lötkontakte mit den Stiften wird dadurch erheblich vereinfacht.

Eine besonders vorteilhafte Verwendung der Anordnung ist die Verwendung für Heckscheibenanschlüsse. Es ist dabei nötig, dass die Länge der einzelnen Anordnung aus Stift, Stiftgehäuse, Lötkontakt und Buchse mit Buchsengehäuse in der Größenordnung von 15 mm liegt, um die Anordnung beispielsweise unter der die Heckscheibe umgebenden Gummilippe zu verbergen.

Ein Ausführungsbeispiel der Erfindung wird anhand der Zeichnungen erläutert. Es zeigen:
Figur 1 eine erfindungsgemässe Anordnung bei der das Buchsengehäuse in den Stiftträger eingesteckt ist,
Figur 1a eine schematische Darstellung der Lage von Stift und Buchse,
Figur 2 eine schematische Darstellung eines Stiftträgers und eines Buchsengehäuses,
Figur 3a bis 3c einen Stift mit Lötkontakt in gestanztem und in gefaltetem Zustand,
Figur 4 einer Ansicht und einen Teilschnitt durch ein zusammengefügtes Stift- und Buchsengehäuse,
Figur 4a einen Querschnitt entlang der Schnittlinie AA gemäss Figur 4,
Figur 5 eine Ansicht einer weiteren erfindungsgemässen Anordnung und Figur 5a einen Querschnitt durch diese Anordnung,
Figur 6a bis 6c einen Kontakt mit Stift und Lötkontakt und Lötmittelreservoir in gestanztem und gefaltetem Zustand,
Figur 7 einen Schnitt durch einen Stiftträger mit eingebrachten Stiften mit Lötkontakten,
Figuren 7a und 7b Schnitte entlang der Schnittlinien AA und BB wie in Figur 7 angegeben und
Figur 7c eine Aufsicht auf einen Stiftträger.

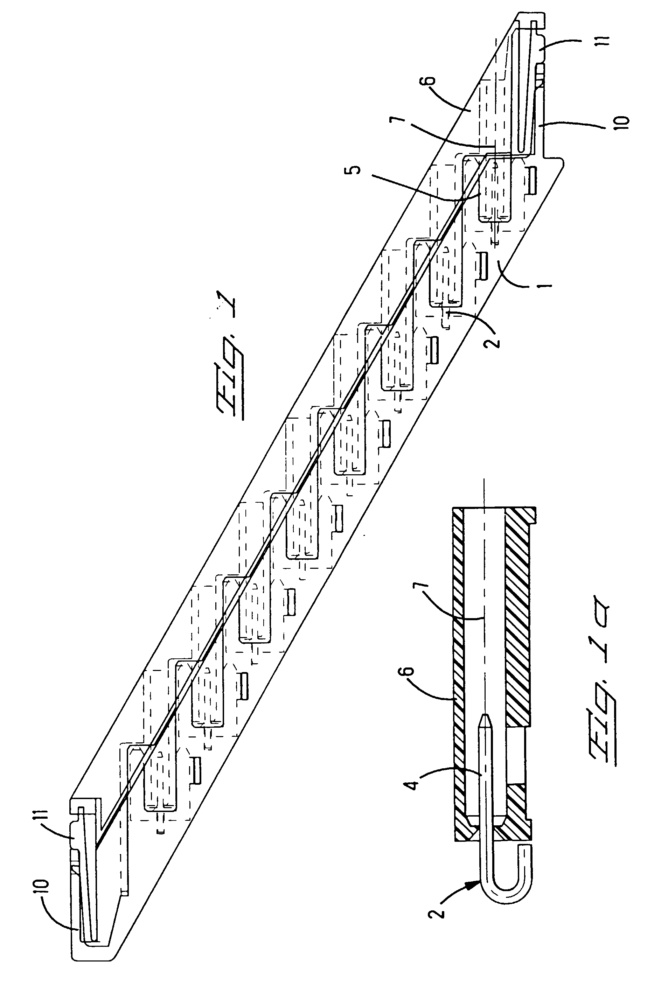

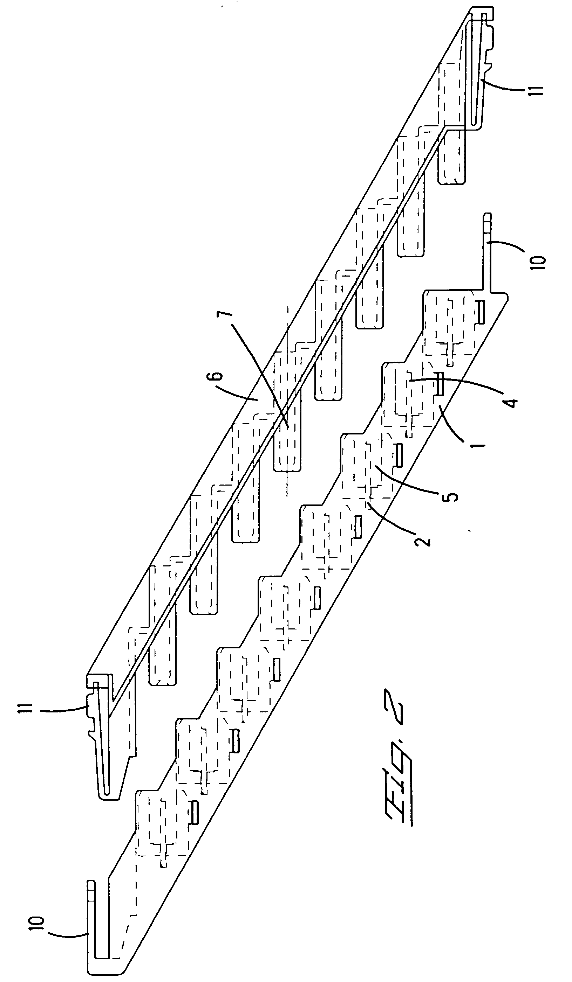

In Figur 1a ist in einem Querschnitt ein Teil eines Buchsengehäuses 6 gezeigt, sowie eine seitliche Ansicht auf einen Kontakt mit einem Stift 2, der in das Buchsengehäuse mit seinem Kontaktierungsbereich 4 eingreift. Der Kontaktierungsbereich 4 greift in eine Kontaktkammer 7 des Buchsengehäuses 6 ein, in der sich im Anwendungsfall ein Buchsenkontakt befindet. Der Stift 2 weist an seinem einen Ende den Kontaktierungsbereich 4 auf und geht an dem anderen Ende in einen Lötkontakt 3 über. Der Lötkontakt 3 oder Lötpat kann sehr unterschiedlich ausgebildet sein. Ist beispielsweise der Stift aus einem Vierkantdraht hergestellt, durch Biegen, so wird der Lötpat durch Prägen eines Endes des Stiftes hergestellt. Der Stift kann jedoch auch durch Stanzen und Formen hergestellt sein. Dabei gibt es zunächst die Möglichkeit, dass das Material aus dem gestanzt wird bereits so dick ist wie der Stift und somit auch der Lötkontakt diese Dicke aufweist oder es gibt die Möglichkeit, dass das Material dünner ist als der Stift und der Stift zusätzlich gefaltet wird. Der Lötkontakt am Stift wird auf entsprechende Lötstützpunkte beispielsweise auf eine Heckscheibe aufgebracht. Der Stift 2 wird von einem Stiftträger 1, beispielsweise einem Kunststoffgehäuse, geschützt. Der Stiftträger 1 weist für jeden Kontakt mit Stift 2 eine Aufnahme 5 auf, die derart ausgebildet ist, dass ein Teil eines Buchsengehäuses darin aufgenommen werden kann. Das Buchsengehäuse 6 weist zu jedem Stift eine Kontaktkammer 7 mit einem Buchsenkontakt auf. In dem in Figur 1 dargestellten Beispiel werden acht Lötstützpunkte kontaktiert. Jeder Lötstützpunkt ist dazu über einen Lötkontakt mit einem Stift 2 verbunden. Die Kontakte mit den Stiften befinden sich in einem gemeinsamen Stiftträger 1. Die Aufnahmen sind im Stiftträger in einer Linie gegeneinander parallel verschoben angeordnet. Das Buchsengehäuse 6 ist entsprechend komplementär ausgebildet. An den Enden von Buchsengehäuse 6 und Stiftträger 1 sind komplementäre Rastmittel 10, 11 angeordnet zum Verrasten der beiden Teile ineinander. Der Stiftträger weist dabei einen Arm mit einer Vertiefung auf in die ein Rasthaken an einem federnd angebrachten Rastarm 11 am Buchsengehäuse 6 einrasten kann. An dem federnd angeordneten Rastarm ist zusätzlich eine Lösetaste angeordnet, durch die der Rastarm wiederum aus der Verriegelung gelöst werden kann. In Figur 2 ist die in Figur 1 dargestellte Anordnung in nicht zusammengefügtem Zustand dargestellt.

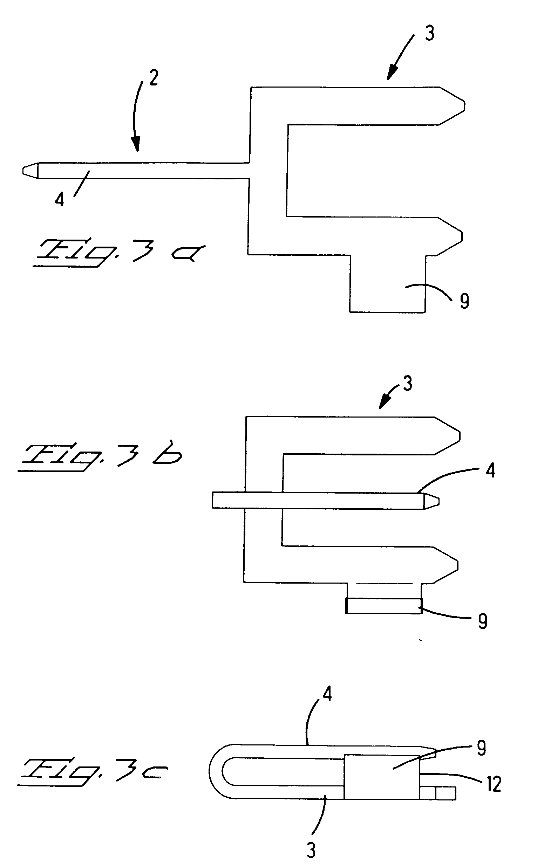

Zum besseren Verständnis zeigen die Figuren 3a bis 3c eine besonders vorteilhafte Anordnung eines Kontaktes mit einem Stift 2 und mit einem Lötkontakt 3. Der Stift weist an einem Ende den Kontaktierungsbereich 4 auf und geht an seinem anderen Ende in den Lötkontakt 3 über. Der Lötkontakt 3 ist U-förmig ausgebildet und weist an einem Schenkel des U's eine Lasche 9 auf, mit der der Stiftträger am Lötkontakt befestigt werden kann. Dazu weist die Lasche 9 an den Schmalseiten Zähne 12 auf, die in die Gehäusewand einschneiden und Stiftträger und Lasche aneinander fixieren. Der Stift 2 ist ebenfalls U-förmig gebogen, wobei er in dem einen Schenkel in den Lötkontakt 3 übergeht. Er ist dabei am Grund des U's des Lötkontaktes mit diesem verbunden.

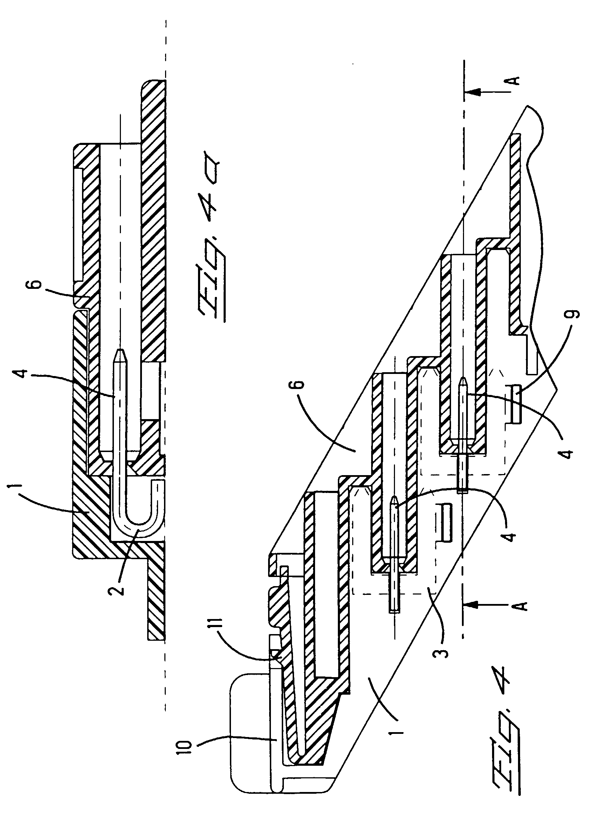

In den Figuren 4 und 4a ist nun die Verwendung eines Lötkontaktes mit Stift beschrieben wie er aus den Figuren 3a bis 3c hervorgeht. Figur 4a zeigt einen Querschnitt durch das Buchsengehäuse 6 und den Stiftträger 1, in dem der Stift 2 mit dem Kontaktierungsbereich 4 zu erkennen ist. Durch eine gestrichelte Linie ist die Ebene angegeben, auf der die gesamte Anordnung fixiert ist, also beispielsweise die Heckscheibe eines Automobils. Aus Figur 4 ist nochmals der Rastmechanismus mit Rastmitteln 10 und 11 dargestellt. Weiter ist ersichtlich, wie der Lötkontakt 3 im Vergleich zu Stiftträger und Buchsengehäuse 6 angeordnet ist. Er ist durch gestrichelte Linien dargestellt. Die Lasche 9 des Lötkontaktes 3 greift in Öffnungen in den Stiftträger 1 ein und fixiert diesen. Der Lötkontakt ist durch den Stiftträger völlig abgedeckt. Die in diesen Figuren angegebene Anordnung ist für folgendes Montageverfahren geeignet: Zuerst werden die Stifte mit den Lötkontakten auf den Lötstützpunkten festgelötet. Danach wird der Stiftträger auf die Stifte aufgeschoben und mittels der Laschen fixiert. Dann kann das Buchsengehäuse eingefügt werden.

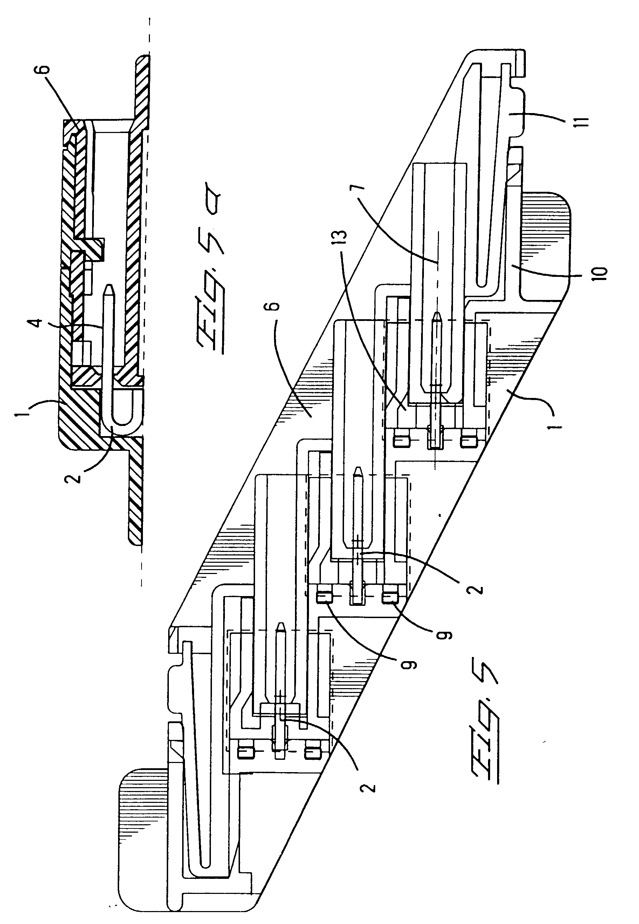

In Figur 5 und 5a ist eine Anordnung dargestellt, bei der das Montageverfahren etwas anders abläuft. Die Stifte sind mittels Laschen 9 an dem Lötkontakt 3 bereits im Stiftträger 1 fixiert. Die Laschen 9 sind bei diesem Ausführungsbeispiel etwas anders angeordnet. Dann wird die gesamte Anordnung auf die Heckscheibe aufgebracht und dort verlötet. Dies ist möglich, da der Lötkontakt neben dem Stiftträger frei zugänglich ist, beispielsweise an der Stelle 13. Davon abgesehen ist die Anordnung sehr ähnlich zu den bisher beschriebenen Anordnungen aufgebaut.

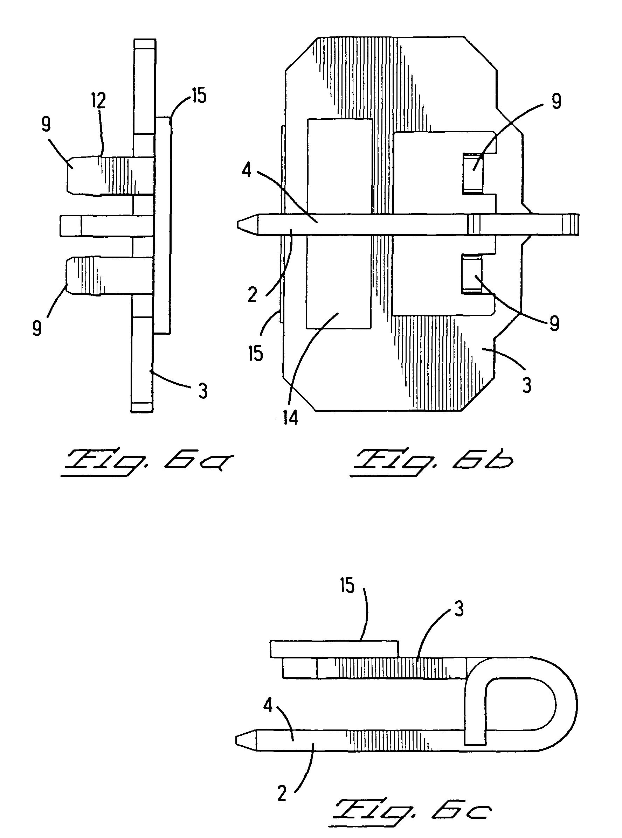

In den Figuren 6a bis 6c ist eine zweite Ausführungsform eines Kontaktes mit Stift dargestellt. Der Stift 2 ist U-förmig gebogen und weist einen Kontaktierungsbereich 4 an seinem freien Ende auf. Das andere Ende des U-förmig gebogenen Stiftes geht in den Lötkontakt 3 über. Der Lötkontakt wird von einer im Wesentlichen rechteckigen Platte gebildet, die eine rechteckige Öffnung 14 aufweist. Es ist ein Lötmittelvorrat 15 vorgesehen, der in der Öffnung 14 verankert ist. Der Lötmittelvorrat 15 dient dazu, dass beim Verlöten des Kontaktes mit einem Lötstützpunkt auf einer Heckscheibe kein zusätzliches Lötmittel zugeführt werden muss. Das Einbringen von Lötmitteln in die Öffnung 14 kann beispielsweise dadurch erfolgen, dass ein Stück Lötdraht in diese Öffnung eingepresst wird. Weiter weist der Lötkontakt 3 eine Ausstanzung mit zwei Laschen 9 auf, die im Endzustand nach oben, also aus der Lötkontaktebene heraus gebogen sind. Die Laschen weisen seitliche Zähne 12 auf, mit denen sie in entsprechende Öffnungen, in die die Laschen 9 im Stiftträger eingebracht werden, einschneiden und dort verhaken. Der in den Figuren 6a bis 6c dargestellte Kontakt wird besonders vorteilhaft durch Stanzen und Biegen hergestellt.

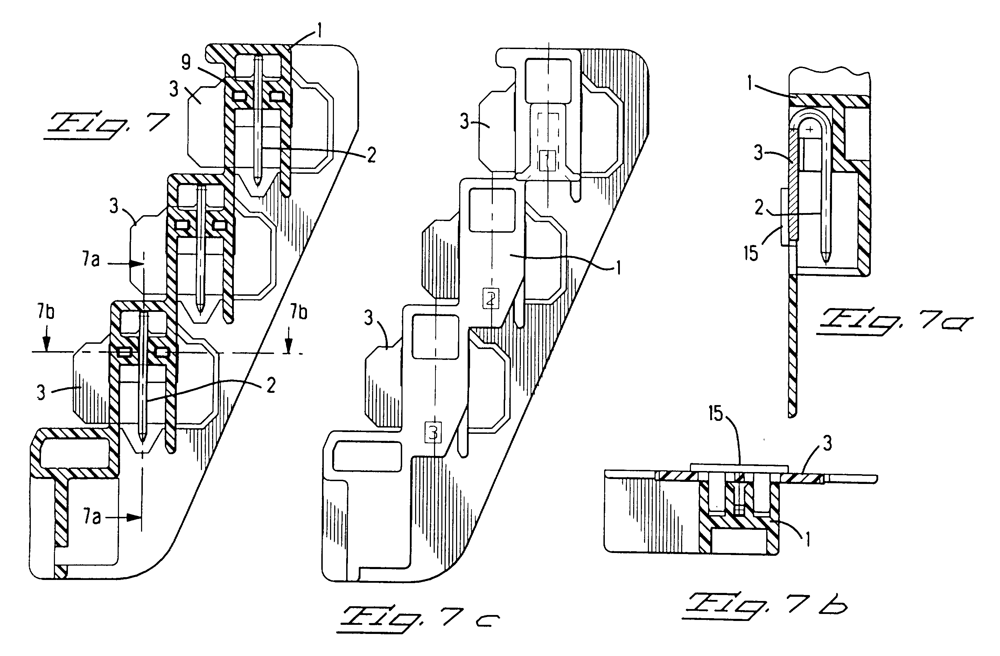

In Figur 7 ist ein Schnitt durch einen Stiftträger 1 mit drei Kontakten mit Stiften 2 und Lötkontakten 3 dargestellt. Deutlich zu erkennen, sind auch die Öffnungen im Stiftträger 1, in die die Laschen 9 der Kontakte eingreifen. In den Figuren 7a und 7b ist jeweils das Lötmittelreservoir 15 deutlich zu erkennen. Weiter ist zu erkennen, dass die Lötkontakte 3 jeweils seitlich neben dem Gehäuse zugänglich sind, derart, dass ein Löten auch dann erfolgen kann, wenn die Kontakte in den Stiftträger eingefügt sind.

## Patentansprüche

1. Anordnung zum Kontaktieren mindestens eines Lötstützpunktes mit folgenden Merkmalen:
Es ist ein Stiftträger (1) vorgesehen, in den zumindest ein Kontakt mit einem Stift (2) als Kontaktierungsbereich (4) einbringbar ist, der Stiftträger (1) weist für jeden Kontakt mit einem Stift (2) eine Aufnahme (5) zur Aufnahme eines Buchsengehäuses (6) auf, wobei sich der Kontaktierungsbereich (4) des Stiftes (2) in der Aufnahme befindet, das Buchsengehäuse (6) weist mindestens eine Kontaktkammer (7) für einen Buchsenkontakt (8) auf, und das Buchsengehäuse (6) und der Stiftträger (1) weisen komplementäre Rastmittel zum Verrasten ineinander auf, dadurch gekennzeichnet, dass der Stift (2) an einem Ende in einen plattenförmigen Lötkontakt (3) übergeht, und dass am Lötkontakt (3) zumindest eine herausgebogene Lasche (9) vorgesehen ist, die in eine entsprechende Öffnung im Stiftträger (1) eingreift und den Stiftträger (1) am Lötkontakt (3) befestigt.

2. Anordnung nach Anspruch 1, dadurch gekennzeichnet, dass der Stift (2) U-förmig gebogen ist, der erste Schenkel den Kontaktierungsbereich (4) bildet und der zweite Schenkel mit dem Lötkontakt (3) verbunden ist.

3. Anordnung nach einem der Ansprüche 1 oder 2, dadurch gekennzeichnet, dass der Lötkontakt (3) im Wesentlichen eine rechteckige Platte bildet, und dass diese an einer Seite in den Stift (2) übergeht.

4. Anordnung nach einem der Ansprüche 1 oder 2, dadurch gekennzeichnet, dass der Lötkontakt (3) U-förmig ausgebildet ist und der Stift am Grund des U's befestigt ist.

5. Anordnung nach einem der Ansprüche 1 bis 4, dadurch gekennzeichnet, dass am Lötkontakt (3) ein Lötmittelvorrat (15) vorgesehen ist.

6. Anordnung nach Anspruch 5, dadurch gekennzeichnet, dass der Lötkontakt (3) eine Öffnung (14) aufweist, in der der Lötmittelvorrat (15) befestigt ist.

7. Anordnung nach einem der Ansprüche 1 bis 6, dadurch gekennzeichnet, dass mehrere Aufnahmen (5) mit Kontakten mit Stiften (2) im Stiftträger nebeneinander angeordnet sind.

8. Anordnung nach Anspruch 7, dadurch gekennzeichnet, dass die Aufnahmen (5) in einer Linie gegeneinander versetzt angeordnet sind.

9. Anordnung nach einem der Ansprüche 7 oder 8, dadurch gekennzeichnet, dass die Rastmittel (10,11) jeweils an beiden Enden der nebeneinander angeordneten Aufnahmen (5) angeordnet sind.

10. Anordnung nach einem der Ansprüche 1 bis 9, dadurch gekennzeichnet, dass der Kontakt mit Stift (2) und Lötkontakt (3) durch Stanzen und Formen hergestellt sind.

11. Anordnung nach einem der Ansprüche 1 bis 10, dadurch gekennzeichnet, dass der Kontakt mit Stift (2) und Lötkontakt (3) aus einem Vierkantdraht durch Prägen und Biegen hergestellt ist.

12. Verwendung der Anordnung nach einem der Ansprüche 1 bis 11 zum Kontaktieren mindestens eines Lötstützpunktes eines Front- oder Heckscheibenanschlusses eines Automobils.

## Claims

1. Arrangement for making contact with at least one solder support point with the following features:
a pin holder (1) is provided into which at least one contact with a pin (2) as contact region (4) can be introduced, the pin holder (1) comprises a socket (5) for receiving a female casing (6) for each contact with a pin (2), the contact region (4) of the pin (2) being located in the socket, the female casing (6) comprises at least one contact chamber (7) for a female contact (8), and the female casing (6) and the pin holder (1) comprise mating catch means for interlocking in one another, characterised in that the pin (2) passes into a plate-shaped solder contact (3) at one end and in that the solder contact (3) is provided with at least one bent out tongue (9) which engages in a corresponding orifice in the pin holder (1) and fastens the pin holder (1) on the solder contact (3).

2. Arrangement according to claim 1, characterised in that the pin (2) is bent into the form of a U, the first arm forms the contact region (4) and the second arm is connected to the solder contact (3).

3. Arrangement according to one of claims 1 or 2, characterised in that the solder contact (3) essentially forms a rectangular plate and in that the rectangular plate passes into the pin (2) on one side.

4. Arrangement according to one of claims 1 or 2, characterised in that the solder contact (3) is U-shaped in design and the pin is fastened on the base of the U.

5. Arrangement according to one of claims 1 to 4, characterised in that a supply of solder flux (15) is provided on the solder contact (3).

6. Arrangement according to claim 5, characterised in that the solder contact (3) comprises an orifice (14) in which the supply of solder flux (15) is fastened.

7. Arrangement according to one of claims 1 to 6, characterised in that a plurality of sockets (5) with contacts having pins (2) are arranged side by side in the pin holder.

8. Arrangement according to claim 7, characterised in that the sockets (5) are mutually offset in a line.

9. Arrangement according to one of claims 7 or 8, characterised in that the catch means (10, 11) are arranged at both respective ends of the sockets (5) arranged side by side.

10. Arrangement according to one of claims 1 to 9, characterised in that the contact with pin (2) and solder contact (3) is produced by punching and shaping.

11. Arrangement according to one of claims I to 10, characterised in that the contact with pin (2) and solder contact (3) is produced from a square wire by stamping and bending.

12. Use of the arrangement according to one of claims 1 to 11 for making contact with at least one solder support point of a windscreen or rear screen connection of a car.

## Revendications

1. Dispositif pour la mise en contact d'au moins un point d'attache de soudure, présentant les caractéristiques suivantes:
le dispositif comporte un support de broche (1), pouvant recevoir au moins un contact avec une broche (2) comme zone de mise en contact (4), le support de broche (1) comportant pour chaque contact avec une broche (2) un logement (5) destiné à recevoir un boîtier de douille (6), la zone de mise en contact (4) de la broche (2) étant agencée dans le logement, le boîtier de douille (6) comportant au moins une chambre de contact (7) pour un contact à douille (8), le boîtier de douille (6) et le support de broche (1) comprenant des moyens d'encliquetage complémentaires en vue d'un encliquetage correspondant, caractérisé en ce que la broche (2) se termine au niveau d'une extrémité dans un contact à souder en forme de plaque (3), et en ce que le contact à souder (3) comporte au moins une bride repliée vers l'extérieur (9), s'engageant dans une ouverture correspondante dans le support de broche (1) et fixant le support de broche (1) au contact à souder (3).

2. Dispositif selon la revendication 1, caractérisé en ce que la broche (2) est pliée en U, la première branche constituant la zone de mise en contact (4) et la deuxième branche étant reliée avec le contact à souder (3).

3. Dispositif selon l'une des revendications 1 ou 2, caractérisé en ce que le contact à souder (3) constitue pour l'essentiel une plaque rectangulaire, celle-ci se terminant au niveau d'une extrémité dans la broche (2).

4. Dispositif selon l'une des revendications 1 ou 2, caractérisé en ce que le contact à souder (3) a une forme en U, la broche étant fixée au fond du U.

5. Dispositif selon l'une des revendications 1 à 4, caractérisé en ce que le contact à souder (3) comporte une réserve d'agent à souder (15).

6. Dispositif selon la revendication 5, caractérisé en ce que le contact à souder (3) comporte une ouverture (14) dans laquelle est fixée la réserve d'agent à souder (15).

7. Dispositif selon l'une des revendications 1 à 6, caractérisé en ce que plusieurs logements (5) contenant les contacts avec les broches (2) sont agencés de manière juxtaposée dans le support de broche.

8. Dispositif selon la revendication 7, caractérisé en ce que les logements (5) sont agencés de manière décalée dans une ligne.

9. Dispositif selon l'une des revendications 7 ou 8, caractérisé en ce que les moyens d'encliquetage (10, 11) sont respectivement agencés au niveau des deux extrémités des logements juxtaposés (5).

10. Dispositif selon l'une des revendications 1 à 9, caractérisé en ce que le contact avec la broche (2) et le contact à souder (3) est produit par estampage et formage.

11. Dispositif selon l'une des revendications 1 à 10, caractérisé en ce que le contact avec la broche (2) et le contact à souder (3) est produit à partir d'un fil carré par estampage et pliage.

12. Utilisation du dispositif selon l'une des revendications 1 à 11 pour la mise en contact d'au moins un point d'attache de soudure d'une connexion de vitre avant ou de vitre arrière d'une automobile.
